# EUROPEAN PATENT APPLICATION

(11) **EP 3 950 198 A1**
(43) Date of publication of application: **09.02.2022**
(21) Application number: 20784415.0
(22) Date of filing: 24.03.2020
(51) Int. Cl.: B23C 5/20, B23C 5/24

(54) **CUTTING INSERT AND ROTARY CUTTING TOOL**

(30) Priority: 29.03.2019 JP 2019068362
(71) Applicant: Mitsubishi Materials Corporation, Tokyo 100-8117 (JP)
(72) Inventor: NAGAYA Hidehiko, Tokyo 100-8117 (JP); SAKUYAMA Toru, Tokyo 100-8117 (JP)
(74) Representative: Hoffmann Eitle
(86) International application number: PCT/JP2020/012995
(87) International publication number: WO 2020/203463

(57) **Abstract**

Provided is a cutting insert (30) to be mounted on an insert mounting seat (4) formed at an outer periphery of a front end part of a tool main body (2) to be rotated around a center axis (O) with a tip portion (31t) of the cutting insert being directed to a fore-end of the center axis, the cutting insert comprising: (O), an insert body (31) having a polygonal plate shape; on one polygonal surface (31f) of the insert body (31), a cutting edge (7) provided at a corner of the tip portion (31t) and having a rake face (32) on the one polygonal surface (31f); and a thinned portion (60, 160, 260) formed at the tip portion (31t) of the insert body (31) and recessed in a thickness direction of the insert body (31) from the one polygonal surface (31f, 31g).

## Description

### [Technical Field]

The present invention relates to a cutting insert and a milling tool.

Priority is claimed on Japanese Patent Application No. 2019-068362, filed March 29, 2019, the content of which is incorporated herein by reference.

### [Background Art]

In the related art, an indexable milling cutter of Patent Document 1 is known. The indexable milling cutter includes a tool main body to be rotated around an axis, a plurality of cutting inserts, and an adjustment mechanism. The tool main body has an insert mounting seat at an outer periphery of a front end part. The cutting insert is detachably mounted on the insert mounting seat. The adjustment mechanism adjusts the position of each cutting insert in the direction of a center axis. The adjustment mechanism abuts to the cutting insert from an aft-end in the direction of a center axis and presses the cutting insert toward a fore-end.

### [Citation List]

### [Patent Document]

[Patent Document 1]
Japanese Unexamined Patent Application, First Publication No. 2015-27707

### [Summary of Invention]

### [Technical Problem]

In this type of milling tool, a centrifugal force acting on the cutting insert and the adjustment mechanism increases as the tool rotation speed increases. The cutting insert has a large weight on the side with the tip portion on which the cutting edge is formed in the direction of the center axis. For this reason, the center of gravity of the cutting insert is biased toward the side with the tip portion in the direction of the center axis. As a result, in a case where an excessively large centrifugal force has acted, there is a possibility that the side with the tip portion of the cutting insert is popped out radially outward from the insert mounting seat. For this reason, the tool rotation speed is set so that the cutting insert is not popped out radially outward.

In view of the above circumstances, an object of the present invention is to provide a cutting insert and a milling tool that can suppress the radially outward displacement of the cutting insert due to a centrifugal force and increase the upper limit of tool rotation speed.

### [Solution to Problem]

One aspect of the cutting insert of the present invention is a cutting insert to be mounted on an insert mounting seat formed at an outer periphery of a front end part of a tool main body to be rotated around a center axis with a tip portion of the cutting insert being directed to a fore-end of the center axis, the cutting insert including: an insert body having a polygonal plate shape; on one polygonal surface of the insert body, a cutting edge provided at a corner of the tip portion and having a rake face on the one polygonal surface; and a thinned portion formed at the tip portion of the insert body and recessed in a thickness direction of the insert body from the one polygonal surface.

One aspect of the milling tool of the present invention includes a tool main body to be rotated around a center axis; and a cutting insert to be mounted on an insert mounting seat with a tip portion of the cutting insert being directed to a fore-end of a center axis, the insert mounting seat being formed at an outer periphery of a front end part of the tool main body, wherein the cutting insert includes: an insert body having a polygonal plate shape; on one polygonal surface of the insert body, a cutting edge provided at a corner of the tip portion and having a rake face on the polygonal surface; and a thinned portion formed at the tip portion of the insert body and recessed in a thickness direction of the insert body from the one polygonal surface.

According to one aspect of the cutting insert and the milling tool of the present invention, since the thinned portion is formed at the tip portion of the insert body, the side with the tip portion of the cutting insert becomes lighter. Accordingly, the position of the center of gravity of the cutting insert approaches the aft-end. Therefore, when the tool main body has rotated around the center axis, it is possible to suppress the radially outward displacement of the side with the tip portion of the cutting insert due to a centrifugal force. As a result, it is possible to increase the upper limit of the tool rotation speed.

The above cutting insert may further include a clamp recess part provided on the one polygonal surface of the insert body, recessed in the thickness direction from the one polygonal surface, and configured to be abutted to a front end of a clamp screw for fixing the insert body to the insert mounting seat, wherein the thinned portion is disposed on a side with the tip portion with respect to the clamp recess part.

In this case, since the thinned portion is formed on the side with the tip portion with respect to the clamp recess part, the side with the tip portion of the cutting insert becomes lighter. The position of the center of gravity of the cutting insert can be set on the clamp recess part side. Accordingly, when the tool main body has rotated around the center axis, it is possible to suppress the radially outward displacement of the side with the tip portion of the cutting insert due to a centrifugal force.

In the above cutting insert, it is preferable that a center of gravity of the insert body is located in the clamp recess part in a plan view.

In this case, the center of gravity of the insert body is at a position close to the clamp screw whose tip abuts to the clamp recess part within the clamp recess part. Accordingly, it is difficult for the insert body to rotate around the position where the tip of the clamp screw comes in contact due to a centrifugal force. Therefore, it is possible to suppress the radially outward displacement of the side with the tip portion of the cutting insert to a centrifugal force.

In the above cutting insert, the thinned portion may have an opening in an end surface of the insert body on a side with the tip portion.

In this case, the side with the tip portion of the cutting insert becomes lighter more effectively. Accordingly, when the tool main body has rotated around the center axis, it is possible to more effectively suppress the radially outward displacement of the side with the tip portion of the cutting insert due to a centrifugal force.

### [Advantageous Effects of Invention]

According to the cutting insert and the milling tool of the one aspect of the present invention, it is possible to suppress the radially outward displacement of the cutting insert due to a centrifugal force and increase the upper limit of the tool rotation speed.

### [Brief Description of Drawings]

Fig. 1 is a perspective view of an indexable milling cutter of an embodiment of the present invention as viewed obliquely from below.
Fig. 2 is a bottom view of the indexable milling cutter of the embodiment of the present invention.
Fig. 3 is a side view of the indexable milling cutter of the embodiment of the present invention.
Fig. 4 is a vertical cross-sectional view of the indexable milling cutter of the embodiment of the present invention.
Fig. 5 is a perspective view showing a tool main body.
Fig. 6 is a perspective view showing a cutting insert according to the embodiment of the present invention.
Fig. 7 is a front view showing a position adjustment mechanism of the cutting insert of the embodiment of the present invention.
Fig. 8A is a perspective view showing a nut member of an adjustment unit in the position adjustment mechanism of Fig. 7.
Fig. 8B is a perspective view showing a shaft member of the adjustment unit in the position adjustment mechanism of Fig. 7.
Fig. 9 is a perspective view showing a cutting insert of a first modification example.
Fig. 10 is a perspective view showing a cutting insert of a second modification example.
Fig. 11 is a perspective view of the cutting insert of Fig. 10 as viewed from a back surface side.

### [Description of Embodiments]

Hereinafter, an indexable milling cutter 1, which is an example of a milling tool of an embodiment of the present invention, and a cutting insert (hereinafter, simply insert) 30 included in the indexable milling cutter 1 will be described with reference to the drawings.

### [Schematic Configuration of Indexable Milling Cutter and Insert]

The indexable milling cutter 1 of the present embodiment is a milling tool (cutting tool) that performs a milling task on a work material such as a metal material. The indexable milling cutter 1 mainly performs tool rotating cutting process (machining operation) such as face milling cutting on the work material. The face milling is milling that forms a machined surface perpendicular to a center axis O of a tool main body 2 with respect to the work material.

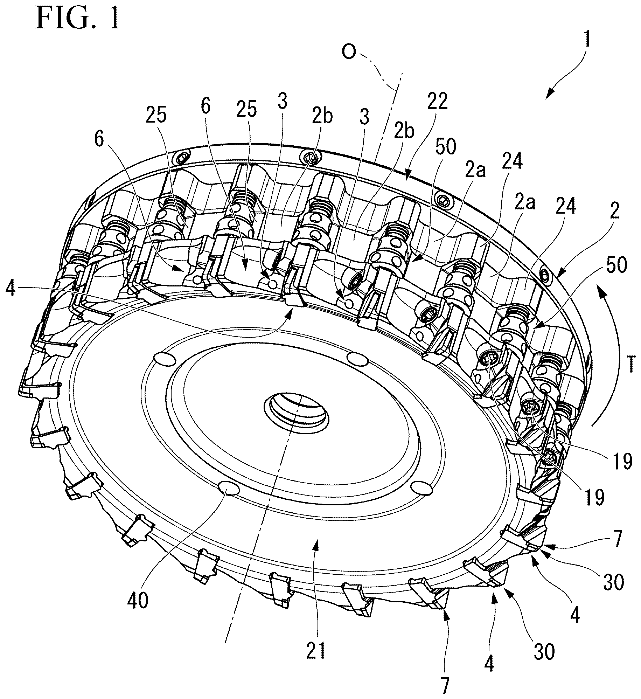

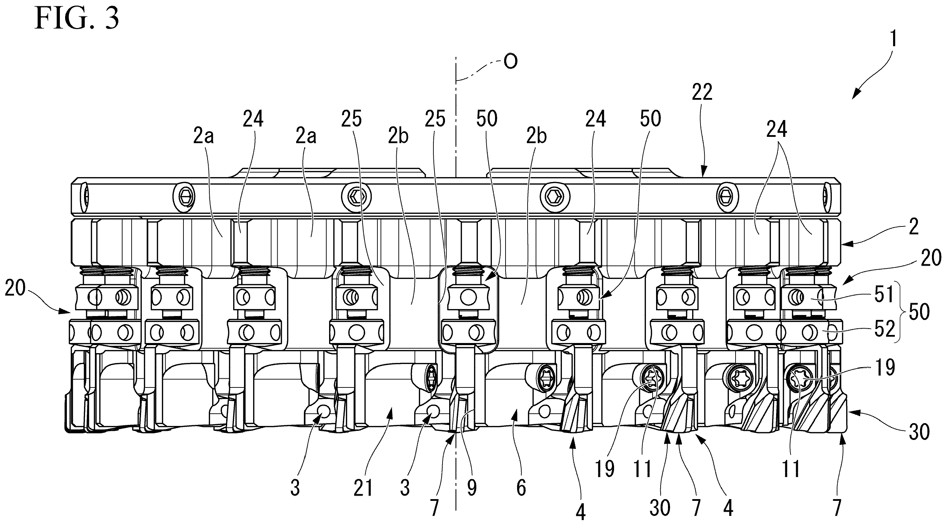

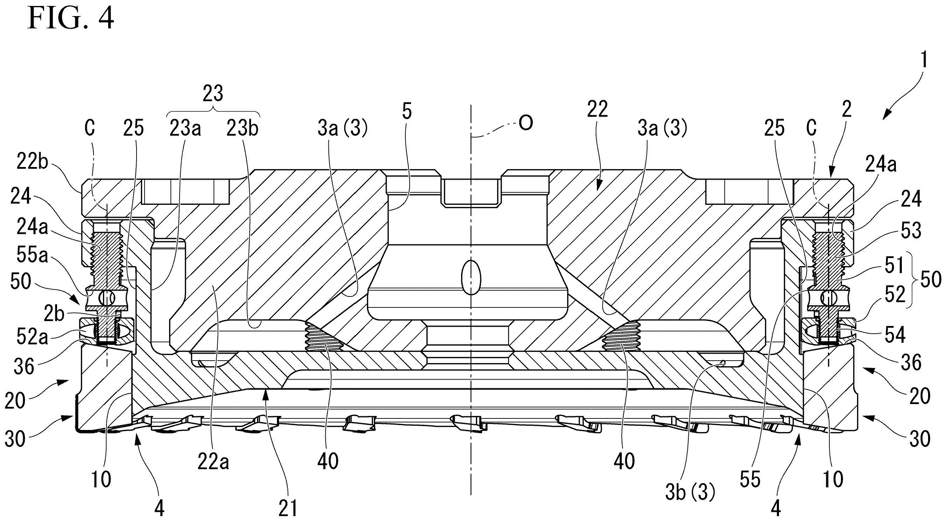

As shown in Figs. 1 to 4, the indexable milling cutter 1 includes the tool main body 2, a plurality of insert 30, and a plurality of adjustment units 50. As shown in Figs. 3 and 4, the indexable milling cutter 1 includes the tool main body 2 and a plurality of position adjustment mechanisms 20, and each position adjustment mechanism 20 includes an insert 30 and an adjustment unit 50.

The tool main body 2 has a substantially cylindrical shape centered on the center axis O. The tool main body 2 is mounted on a main spindle of a machine tool (not shown) and is rotated around the center axis O by the main spindle.

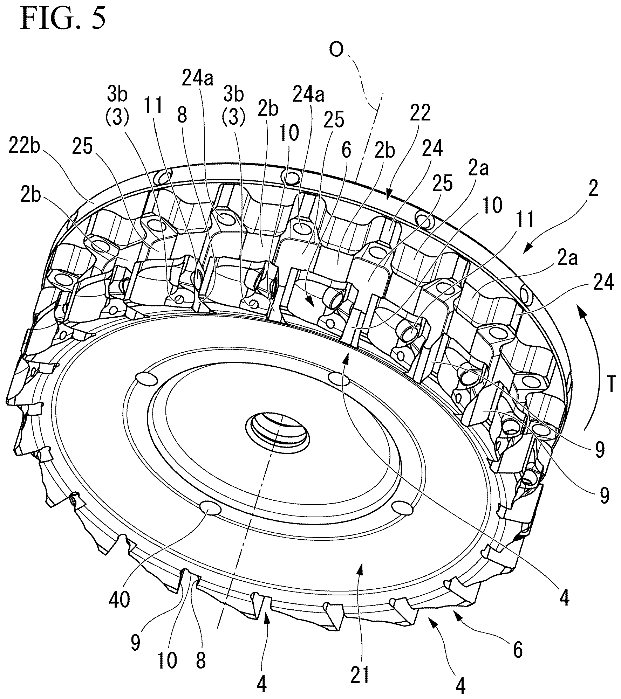

The plurality of insert 30 are disposed at a distance from each other in a circumferential direction at an outer periphery of a front end part of the tool main body 2. Each insert 30 is referred to as a cutting insert or cutting tip. The insert 30 is detachably mounted at the outer periphery of the front end part of the tool main body 2. As shown in Figs. 1 to 5, a plurality of insert mounting seats 4 are provided at a distance from each other in the circumferential direction at the outer periphery of the front end part of the tool main body 2. As shown in Figs. 1 to 4, each insert 30 is detachably mounted on each insert mounting seat 4.

The insert 30 has a cutting edge 7. In the insert 30 mounted on the insert mounting seat 4, the cutting edge 7 is disposed to protrude toward a fore-end and a radially outer side from the tool main body 2.

In the indexable milling cutter 1 of the present embodiment, the insert mounting seats 4 are provided at 10 or more spots (for example, 20 spots) at a distance from each other in the circumferential direction in the tool main body 2, and 10 or more (for example, 20) inserts 30 are also provided by the same number as the number of the insert mounting seats 4. The indexable milling cutter 1 is a so-called multi-blade type milling cutter. In addition, in the present embodiment, the multi-blade type is an exemplary example as the milling tool, but the tool is not necessarily limited to the multi-blade type.

An upper portion of the tool main body 2 of the indexable milling cutter 1 is mounted on the main spindle of the machine tool. In the indexable milling cutter 1, the tool main body 2 is moved in a direction (for example, orthogonal direction) intersecting the center axis O while being rotated in the tool rotation direction T of the center axis O by the main spindle. Then, milling task is performed on the work material by the cutting edges 7 of the plurality of inserts 30 mounted on the tool main body 2.

### [Definition of Orientation (Direction) Used in Present Embodiment]

In the present embodiment, a direction (a direction in which center axis O extends) along the center axis O of the tool main body 2 is referred to as an axial direction. In the axial direction, a direction from a fitting portion 5 of the tool main body 2 mounted on the main spindle of the machine tool toward the insert mounting seat 4 and the insert 30 is referred to as a side with the tip portion, and a direction from the insert mounting seat 4 and the insert 30 to the fitting portion 5 is referred to as an aft-end.

A direction orthogonal to the center axis O is referred to as a radial direction. In the radial direction, an orientation approaching the center axis O is referred to as a radially inner side, and an orientation away from the center axis O is referred to as a radially outer side.

A direction orbiting around the center axis O is referred to as a circumferential direction. In the circumferential direction, an orientation in which the tool main body 2 is rotated by the main spindle of the machine tool during machining operation is referred to as the tool rotation direction T, and a rotation direction opposite to this orientation is referred to as a direction (or a tool counter-rotation direction) opposite to the tool rotation direction T.

### [Description of Tool Main Body 1]

The tool main body 2 has an outer main body portion 21, an inner main body portion 22, a space portion 23, and a coolant hole 3. Additionally, the tool main body 2 has a chip pocket 6, the insert mounting seat 4, a support portion 24, and a depression portion 25. The chip pocket 6, the insert mounting seat 4, the support portion 24, and the depression portion 25 are disposed in the outer main body portion 21.

In addition, in the present embodiment, a portion between the depression portions 25 lying next to each other in the circumferential direction (a portion 2b, which will be described below) is convex radially outward with respect to the depression portion 25. However, the depression portion 25 may be a continuous columnar surface in the circumferential direction. In this case, the depression portion 25 can be machined by a lathe.

As shown in Fig. 4, the outer main body portion 21 has a bottomed tubular shape. The outer main body portion 21 has a surrounding wall and a bottom wall. The outer main body portion 21 is made of, for example, a steel material.

The inner main body portion 22 has a substantially columnar shape. The inner main body portion 22 is disposed inside the outer main body portion 21. That is, the inner main body portion 22 has a portion located inside the outer main body portion 21.

The inner main body portion 22 is made of, for example, an aluminum material. The specific gravity of the inner main body portion 22 is smaller than the specific gravity of the outer main body portion 21.

The inner main body portion 22 has a columnar portion 22a and a flange portion 22b.

The fitting portion 5 is formed on a rear end surface (upper surface) of the columnar portion 22a. The fitting portion 5 is a hole that opens to the rear end surface of the columnar portion 22a and is recessed from the rear end surface to the side with the tip portion. The main spindle of the machine tool is inserted into the fitting portion 5.

The flange portion 22b spreads radially outward from a rear end portion (upper end portion) of the columnar portion 22a. The flange portion 22b has a circular ring plate shape. A tip surface (lower surface) of the flange portion 22b faces a rear end surface (upper surface) of the surrounding wall of the outer main body portion 21.

A portion adjacent to the side with the tip portion of the flange portion 22b on an outer peripheral surface of the columnar portion 22a is fitted into a rear end opening of the surrounding wall of the outer main body portion 21.

An outer peripheral end portion and an inner peripheral end portion on the tip surface of the columnar portion 22a come into contact with a rear end surface of the bottom wall of the outer main body portion 21 from the aft-end. The columnar portion 22a and the bottom wall of the outer main body portion 21 are fastened by a screw member 40 and fixed to each other.

The space portion 23 is located between the outer main body portion 21 and the inner main body portion 22. The space portion 23 is a thinned space provided inside the tool main body 2. The space portion 23 has a first space portion 23a and a second space portion 23b.

The first space portion 23a is disposed between the surrounding wall of the outer main body portion 21 and the outer peripheral surface of the columnar portion 22a. The first space portion 23a is a cylindrical space centered on the center axis O.

The second space portion 23b is disposed between the bottom wall of the outer main body portion 21 and the tip surface of the columnar portion 22a. The second space portion 23b is a circular ring-shaped space centered on the center axis O. The second space portion 23b is located between the outer peripheral end portion and the inner peripheral end portion on the tip surface of the columnar portion 22a. The second space portion 23b constitutes a portion of a passage of the coolant hole 3.

The coolant hole 3 extends inside the tool main body 2. The coolant hole 3 penetrates the tool main body 2. The coolant (cutting fluid) supplied through a main spindle of a machine tool flows inside the coolant hole 3. The coolant hole 3 has a first coolant hole 3a, a second coolant hole 3b, and the second space portion 23b.

The first coolant hole 3a penetrates the inner main body portion 22. The first coolant hole 3a opens to an inner peripheral surface of the fitting portion 5 and the tip surface of the columnar portion 22a. A tip portion of the first coolant hole 3a is connected to the second space portion 23b. A plurality (for example, four) of the first coolant holes 3a are provided at a distance from each other in the circumferential direction.

The second coolant hole 3b penetrates the outer main body portion 21. The second coolant hole 3b opens to the rear end surface of the bottom wall of the outer main body portion 21 and an outer peripheral surface of the surrounding wall. A rear end portion of the second coolant hole 3b is connected to the second space portion 23b. A tip portion (radially outer end portion) of the second coolant holes 3b opens to the chip pocket 6. The tip portion of the second coolant hole 3b opens toward the cutting edge 7 of the insert 30. The plurality of second coolant holes 3b are provided at a distance from each other in the circumferential direction. The number of second coolant holes 3b is the same (for example, 20) as the number of chip pockets 6 and the number of inserts 30.

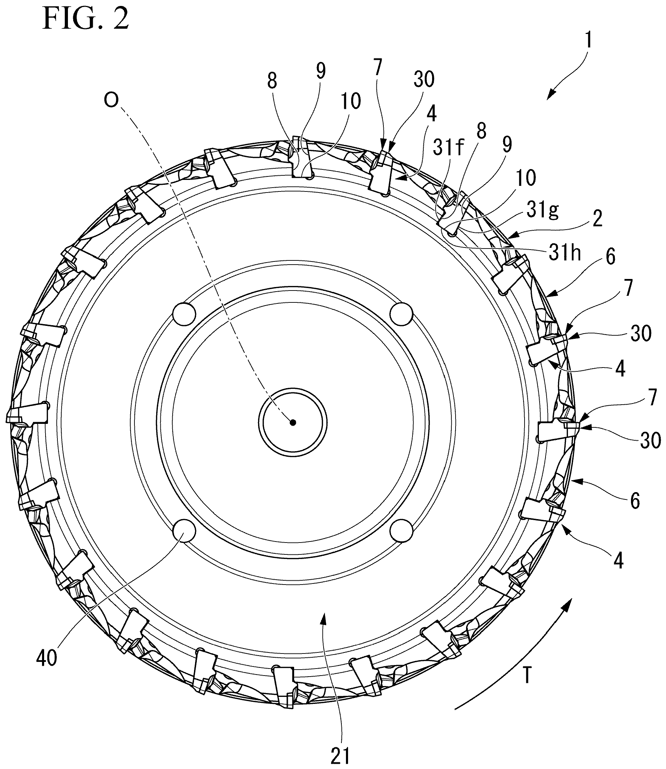

As shown in Figs. 1 and 2, a plurality of chip pockets 6 are provided at a distance from each other in the circumferential direction at the outer periphery of the front end part of the tool main body 2 (outer main body portion 21). Each chip pocket 6 is formed by being recessed in a concave shape at the outer periphery of the front end part of the tool main body 2.

The insert mounting seat 4 is disposed adjacent to the chip pocket 6 in the direction opposite to the tool rotation direction T, in the outer periphery of the front end part of the tool main body 2 (outer main body portion 21). In other words, the chip pocket 6 is disposed adjacent to the insert mounting seat 4 in the tool rotation direction T. The insert mounting seat 4 has a rectangular hole shape or a groove shape, corresponding to the shape of the insert 30.

A detailed description of the insert mounting seat 4 and a description of portions other than the above-described ones of the tool main body 2 will be separately described below.

### [Insert]

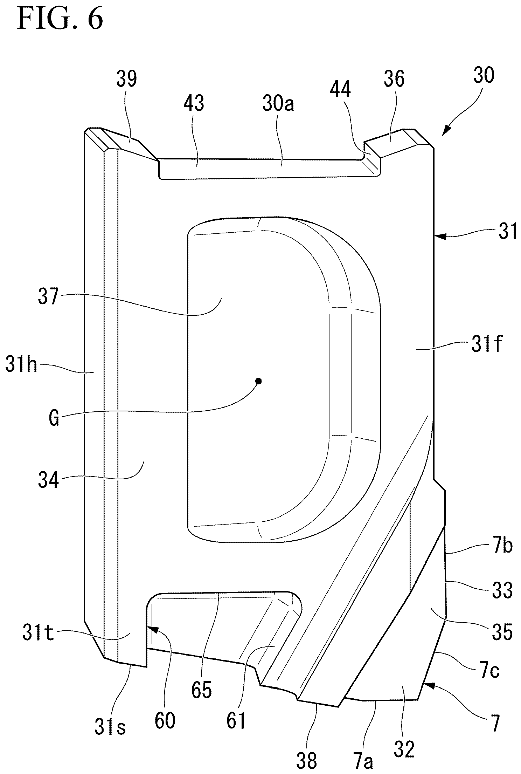

As shown in Fig. 6, the insert 30 is a face milling insert used for, for example, the face milling task (face milling). The insert 30 is mounted on the tool main body 2 with a tip portion 31t directed to the axial side with the tip portion. As the plurality of inserts 30 mounted on the tool main body 2, only one type in which the shapes of the cutting edges 7 are same as each other may be used, or a plurality of types in which the shapes of the cutting edges 7 are different from each other may be used.

The insert 30 has an insert body 31 mounted on the insert mounting seat 4 of the tool main body 2, the cutting edge 7 that extends along an intersecting ridge line between a rake face 32 and a flank face 33 of the insert body 31 and is disposed at the outer periphery of the tip of the insert body 31, a thinned portion 60, and a clamp recess part 37.

The insert body 31 has a polygonal plate shape. In the example of the present embodiment, the insert body 31 has a rectangular plate shape. When the insert 30 is mounted on the insert mounting seat 4, the longitudinal direction of a rectangular surface (a polygonal surface, a main surface 31f, and a back surface 31g) of the insert body 31 is disposed along the axial direction of the tool main body 2 (refer to Fig. 2).
Additionally, a short-length direction of the rectangular surface of the insert body 31 is disposed in the radial direction of the tool main body 2 (refer to Fig. 1).

The insert body 31 has a rectangular plate-shaped base metal portion 34 and a triangular plate-shaped cutting portion 35 joined to one corner of the base metal portion 34 to form a cutting edge 7.

The base metal portion 34 is made of, for example, a cemented carbide. The cutting portion 35 is made of an ultra-high pressure sintered material such as a diamond sintered material or a cBN sintered material having a hardness higher than that of the base metal portion 34. However, the present invention is not limited to this, and the entire insert body 31 including the base metal portion 34 and the cutting portion 35 is made of, for example, cemented carbide and may be integrally formed of a single member.

In the present embodiment, the cutting portion 35 is disposed at one corner of one polygonal surface (main surface 31f) out of a pair of polygonal surfaces (rectangular surfaces) constituting the main surface and the back surface of the insert body 31 and joined to the base metal portion 34 by brazing, integral sintering, or the like. The corner is a corner located at the outer periphery of the tip of the indexable milling cutter 1 when the insert 30 has been mounted on the insert mounting seat 4. Therefore, the corner is a corner of the tip portion 31t.

The clamp recess part 37 recessed in the thickness direction from the main surface 31f is formed on the main surface 31f that is one polygonal surface of the base metal portion 34. In the example of the present embodiment, the clamp recess part 37 has a D shape in a plan view of the insert 30 as viewed from the thickness direction. However, the clamp recess part 37 is not limited to the D shape in a plan view. The depth of the clamp recess part 37 becomes deeper from an end portion on a side opposite to the cutting portion 35 toward the cutting portion 35 in the short-length direction of the insert body 31. That is, a bottom surface of the clamp recess part 37 is an inclined surface. When the insert 30 has been mounted on the insert mounting seat 4, the bottom surface of the clamp recess part 37 extends in the direction opposite to the tool rotation direction T as approaching the radially outer side.

On one polygonal surface of the base metal portion 34, a rib 38 protruding in the thickness direction from the polygonal surface is formed at a portion located between the clamp recess part 37 and the cutting portion 35. In the plan view of the insert 30, the rib 38 extends linearly substantially parallel to an oblique side of the cutting portion 35 having a substantially right-angled triangular shape. The rib 38 is disposed so as to face the cutting portion 35 from the longitudinal direction and the short-length direction of the insert body 31. For this reason, when the insert 30 has been mounted on the insert mounting seat 4, the rib 38 is disposed so as to face the cutting edge 7 from an axially aft-end and from the radially inner side. Chips generated by cutting the work material by the cutting edge 7 come into contact with the rib 38.

As shown in Fig. 1, the thickness of the insert 30 becomes thicker from the cutting portion 35 toward the end portion on a side opposite to the cutting portion 35 in the short-length direction of the insert body 31. That is, when the insert 30 has been mounted on the insert mounting seat 4, the thickness of the insert 30 increases radially inward.

As shown in Fig. 2, when the insert 30 has been mounted on the insert mounting seat 4, the axial rake (axial rake angle) of the cutting edge 7 is a positive angle.

In Fig. 6, the portion of the cutting edge 7 that extends in the short-length direction of the insert body 31 is a front edge 7a. The front edge 7a has a linear shape. In addition, the front edge 7a is not limited to the linear shape and may be, for example, a convex curve shape having a large curvature radius. When the insert 30 has been mounted on the insert mounting seat 4, the front edge 7a protrudes from the insert mounting seat 4 toward the side with the tip portion of the tool main body 2.

The portion of the cutting edge 7 that extends in the longitudinal direction of the insert body 31 is a peripheral cutting edge 7b. The peripheral cutting edge 7b has a linear shape. When the insert 30 has been mounted on the insert mounting seat 4, the peripheral cutting edge 7b protrudes from the insert mounting seat 4 toward a radially outer side of the tool main body 2.

The portion of the cutting edge 7 located between the front edge 7a and the peripheral cutting edge 7b is a corner edge 7c. The corner edge 7c has a convex curve shape or a linear shape. When the insert 30 has been mounted on the insert mounting seat 4, the corner edge 7c protrudes from the insert mounting seat 4 toward the outer peripheral side of the front end part of the tool main body 2.

As shown in Figs. 4, 6, and 7, the insert 30 has a centrifugal force receiving portion 36. The centrifugal force receiving portion 36 is capable of supporting the adjustment unit 50 radially inward. The centrifugal force receiving portion 36 is capable of supporting the nut member 52 (to be described below) of the adjustment unit 50 radially inward. The centrifugal force receiving portion 36 receives a centrifugal force acting on the adjustment unit 50 during machining operation (a force directed to the radially outer side of the tool) from the radially outer side. In addition, a detailed description of the adjustment unit 50 will be separately described below.

The centrifugal force receiving portion 36 is disposed at a rear end portion of the insert 30 (insert body 31).

The centrifugal force receiving portion 36 is provided at the rear end portion of the insert 30 and is capable of supporting the tip portion of the adjustment unit 50 radially inward. In the present embodiment, the centrifugal force receiving portion 36 abuts to the adjustment unit 50 in the radial direction. The centrifugal force receiving portion 36 abuts to the adjustment unit 50 from the radially outer side. In the example of the present embodiment, the centrifugal force receiving portion 36 also abuts to the adjustment unit 50 in the axial direction. The centrifugal force receiving portion 36 abuts to the adjustment unit 50 from the side with the tip portion.

Specifically, the centrifugal force receiving portion 36 is disposed on a rear end surface 30a of the insert 30 (insert body 31). The rear end surface 30a is an inclined surface that extends toward the side with the tip portion as approaching a radially inner side. For this reason, the centrifugal force receiving portion 36 is also an inclined surface that extends toward the side with the tip portion as approaching the radially inner side. In other words, the centrifugal force receiving portion 36 is an inclined surface that extends radially inward as approaching the side with the tip portion. The centrifugal force receiving portion 36 is located radially outside a center line C of the adjustment unit 50 to be described below. The centrifugal force receiving portion 36 is located at a radially outer end portion of the rear end surface 30a.

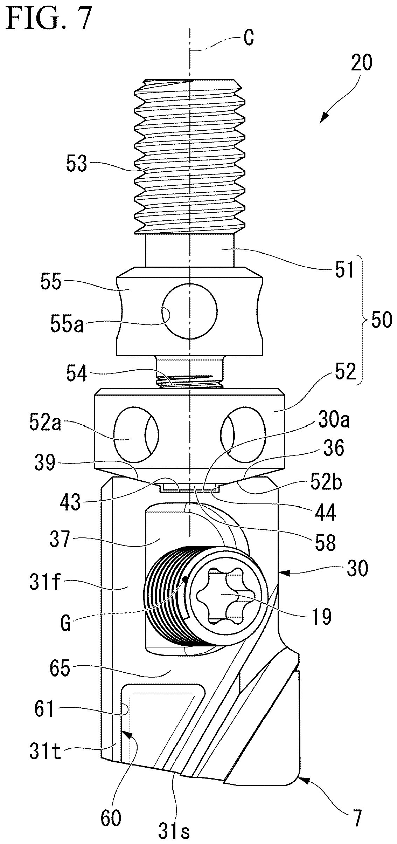

As shown in Figs. 6 and 7, the insert 30 has a contact portion 39. The contact portion 39 is located radially inside the centrifugal force receiving portion 36 on the rear end surface 30a of the insert 30. The contact portion 39 is an inclined surface that extends radially outward as approaching the side with the tip portion. The contact portion 39 is located radially inside the center line C of the adjustment unit 50 to be described below. The contact portion 39 is located at the radially outer end portion of the rear end surface 30a.

The contact portion 39 functions as a portion of a pressed surface that receives a pressing force directed from the adjustment unit 50 toward the axial side with the tip portion. Accordingly, the pressing force from the adjustment unit 50 can be received in a wide range (multiple spots) of the rear end surface 30a of the insert 30. The rear end surface 30a has a planar shape that spreads in a direction perpendicular to the center line C. Therefore, the pressing balance from the nut member 52 to the insert 30 is stable.

The insert 30 has a recessed portion 43 that is recessed from the centrifugal force receiving portion 36 and the contact portion 39 of the insert 30 toward the side with the tip portion. The recessed portion 43 is located between the centrifugal force receiving portions 36 and the contact portions 39 at both radial end portions of the rear end surface 30a. A standing wall surface of an inner surface of the recessed portion 43 that faces radially inward is a second centrifugal force receiving portion (centrifugal force receiving portion) 44. The second centrifugal force receiving portion 44 has a planar shape that spreads in a direction perpendicular to the radial direction of the tool. The second centrifugal force receiving portion 44 extends from the bottom surface of the recessed portion 43 toward the aft-end.

When a centrifugal force directed radially outward has acted on the adjustment unit 50, the insert 30 receives the centrifugal force at the second centrifugal force receiving portion 44.

The insert 30 as described above has the thinned portion 60. The thinned portion 60 is provided at an axial tip portion 31t of the insert body 31. The thinned portion 60 is formed closer to the axial side with the tip portion than the clamp recess part 37 in the insert body 31. The thinned portion 60 is a thinned recessed portion 61 that is recessed in the thickness direction of the insert body 31 from the main surface 31f that is one polygonal surface of the insert body 31. The clamp recess part 37 and the thinned recessed portion 61 are formed at a distance from each other in the axial direction on the main surface 31f of the insert body 31. A beam-shaped portion 65 that extends in the short-length direction of the insert body 31 is formed between the clamp recess part 37 and the thinned recessed portion 61.

The thinned recessed portion 61 opens toward the axial side with the tip portion on an end surface 31s of the insert body 31 on the axial side with the tip portion.

The thinned recessed portion 61 reduces the weight of the insert 30. By forming the thinned recessed portion 61 at the tip portion 31t of the insert body 31, the weight of the insert 30 on the axial side with the tip portion is reduced. In such an insert 30, the center of gravity G of the insert body 31 is located in the clamp recess part 37 in a plan view. The thinned recessed portion 61 reduces the centrifugal force acting on the tip portion 31t of the insert body 31 when the centrifugal force acting radially outward has acted on the insert 30. In addition, here, the "plan view" of the insert 30 means a field viewed from a direction orthogonal to the rake face 32 of the insert body 31.

### [Description of Tool Main Body 2]

The insert mounting seat 4 of the tool main body 2 will be described in detail.

As shown in Figs. 2, 3, and 5, the insert mounting seat 4 opens to the tip surface and the outer peripheral surface of the tool main body 2 and extends in the axial direction. The insert mounting seat 4 has a first wall surface 8 that faces the direction opposite to the tool rotation direction T, a second wall surface 9 that faces the tool rotation direction T, a third wall surface 10 that is located at a radially inner end portion of the insert mounting seat 4 and faces radially outward, and a clamp screw hole 11.

As shown in Fig. 2, in the example of the present embodiment, the first wall surface 8 has a planar shape that spreads along a virtual plane (not shown) including the center axis O of the tool main body 2, and the third wall surface 10 has a planar shape substantially orthogonal to the first wall surface 8. Additionally, the second wall surface 9 extends in the tool rotation direction T as approaching the radially outer side. For this reason, the distance between the second wall surface 9 and the first wall surface 8 (the circumferential width of the insert mounting seat 4) becomes smaller as approaching the radially outer side.

The insert 30 is inserted toward the axially aft-end with respect to the insert mounting seat 4.

When the insert 30 is inserted into the insert mounting seat 4, the main surface 31f facing the thickness direction of the insert 30 (one of the polygonal surfaces) abuts to the first wall surface 8. In addition, when the insert 30 is fixed with the clamp screw 19 as described below, a slight gap is provided between the main surface 31f facing the thickness direction of the insert 30 and the first wall surface 8. The back surface 31g (other polygonal surface) facing the thickness direction of the insert 30 abuts to the second wall surface 9. The side surface 31h of the insert 30 facing the short-length direction abuts to the third wall surface 10. The insert 30 is sandwiched between the first wall surface 8 and the second wall surface 9 from the circumferential direction.

In the example of the present embodiment, as described above, the circumferential width of the insert mounting seat 4 becomes smaller as approaching the radially outer side. Thus, the radially outward movement of the insert 30 inserted into the insert mounting seat 4 with respect to the insert mounting seat 4 is suppressed. That is, it is possible to prevent the insert 30 from coming out of the insert mounting seat 4 radially outward.

The insert 30 slidingly moves in the axial direction with respect to the insert mounting seat 4. That is, the insert 30 slidingly moves in the axial direction with respect to the tool main body 2.

The clamp screw hole 11 opens to an outer peripheral surface (chip pocket 6) of the tool main body 2 and the first wall surface 8. A female thread portion is formed on an inner peripheral surface of the clamp screw hole 11. The clamp screw hole 11 extends radially inward in the direction opposite to the tool rotation direction T. A clamp screw 19 is screwed to the clamp screw hole 11 (refer to Fig. 3). As shown in Fig. 7, a tip of the clamp screw 19 abuts to the bottom surface of the clamp recess part 37 of the insert 30. The insert 30 is fixed to the insert mounting seat 4 as the clamp screw 19 is screwed into the clamp screw hole 11.

### [Adjustment Unit]

As shown in Fig. 3, the plurality of adjustment units 50 are disposed at a distance from each other in the circumferential direction at an outer periphery of the tool main body 2 (outer main body portion 21). Each adjustment unit 50 presses the insert 30 toward the axial side with the tip portion to adjust the axial position of the insert 30. The adjustment unit 50 adjusts the axial position of the insert 30 with respect to the tool main body 2, thereby adjusting the axial position of the cutting edge 7. The number of adjustment units 50 is the same as the number of inserts 30. In the example of the present embodiment, 10 or more adjustment units 50 (for example, 20) are provided at the outer periphery of the tool main body 2.

As shown in Figs. 3, 4, and 7, the adjustment unit 50 includes a shaft member 51 and a nut member 52.

The shaft member 51 is supported by the tool main body 2. The shaft member 51 is screwed to the tool main body 2. The nut member 52 is screwed to the shaft member 51 and configured to be abutted to the insert 30.

As shown in Fig. 4, the center line C of the shaft member 51 extends in the axial direction of the tool main body 2. That is, the center line C of the adjustment unit 50 extends in the axial direction. The direction in which the center line C of the shaft member 51 extends corresponds to the axial direction of the tool main body 2. The shaft member 51 is rotated around the center line C with respect to the tool main body 2 (support portion 24) and thereby moved in the axial direction with respect to the tool main body 2 by the action of the screw. The nut member 52 is rotated around the center line C with respect to the shaft member 51 and the tool main body 2 and thereby moved in the axial direction with respect to the shaft member 51 and the tool main body 2 by the action of the screw.

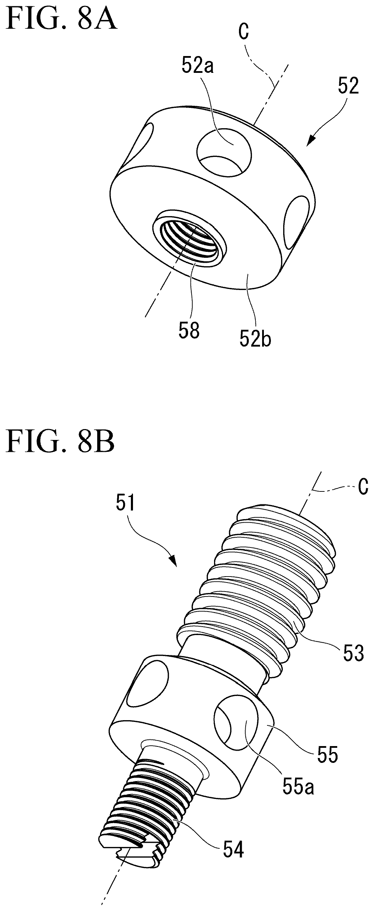

As shown in Fig. 8B, the shaft member 51 includes a first screw shaft 53 located at a rear end portion of the shaft member 51, a second screw shaft 54 located at a tip portion, and an operating portion 55 located between the first screw shaft 53 and the second screw shaft 54 in the axial direction.

The outer diameter of the first screw shaft 53 is larger than the outer diameter of the second screw shaft 54. Male thread portions are respectively formed on an outer peripheral surface of the first screw shaft 53 and an outer peripheral surface of the second screw shaft 54. The male thread portion of the first screw shaft 53 and the male thread portion of the second screw shaft 54 have different thread pitches from each other. Specifically, the thread pitch of the male thread portion of the first screw shaft 53 is larger than the thread pitch of the male thread portion of the second screw shaft 54.

The operating portion 55 has a columnar shape or a disk shape. The outer diameter of the operating portion 55 is larger than the outer diameter of the first screw shaft 53 and the outer diameter of the second screw shaft 54. A shaft operation hole 55a opens to an outer peripheral surface of the operating portion 55. A plurality of (for example, four at equal intervals) the shaft operation holes 55a are provided at a distance from each other around the center line C on the outer peripheral surface of the operating portion 55. As shown in Fig. 4, the shaft operation hole 55a extends in a direction orthogonal to the center line C. In the example of the present embodiment, the shaft operation hole 55a is formed so as to penetrate the operating portion 55 in the direction orthogonal to the center line C. A working tool such as a wrench (not shown) is inserted into the shaft operation hole 55a.

As shown in Fig. 8A, the nut member 52 has a cylindrical or circular ring plate shape centered on the center line C. The outer diameter of the nut member 52 is larger than the outer diameter of the shaft member 51. A female thread portion is formed on the inner peripheral surface of the nut member 52. The nut member 52 is screwed to the second screw shaft 54. A nut operation hole 52a opens to an outer peripheral surface of the nut member 52. A plurality of (for example, five at equal intervals) the nut operation holes 52a are provided at a distance from each other around the center line C on the outer peripheral surface of the nut member 52. Each nut operation hole 52a extends in the direction orthogonal to the center line C. In the example of the present embodiment, the nut operation hole 52a is a stop hole having a bottom portion. A working tool such as a wrench (not shown) is inserted into the nut operation hole 52a.

The nut member 52 has the largest outer diameter in the adjustment unit 50.

For this reason, as shown in Fig. 4, in the adjustment unit 50 mounted on the tool main body 2, a radially outer end located most radially outside the tool main body 2 is a portion of the outer peripheral surface of the nut member 52. The radial position of the radially outer end of the adjustment unit 50 is radially inside the radial position of the radially outer end (peripheral cutting edge 7b) of the insert 30.

A tip surface of the nut member 52 abuts to the rear end surface of the insert 30 from the aft-end.

For this reason, the axial position of the insert 30 is adjusted by adjusting either the screwing amount of the shaft member 51 with respect to the tool main body 2 or the screwing amount of the nut member 52 with respect to the shaft member 51 in a state where the clamp screw 19 is loosened or temporarily tightened. That is, the axial positions of the insert 30 and the cutting edge 7 with respect to the insert mounting seat 4 are adjustable by operating the working tool to rotate either the shaft member 51 or the nut member 52 around the center line C. After the position of the insert 30 is adjusted, the clamp screw 19 is screwed in and finally tightened, thereby fixing the insert 30 to the insert mounting seat 4.

In addition, the axial position of the insert 30 may be minutely adjusted by adjusting either the screwing amount of the shaft member 51 with respect to the tool main body 2 or the screwing amount of the nut member 52 with respect to the shaft member 51 in a state where the clamp screw 19 is finally tightened.

As shown in Figs. 7 and 8A, the nut member 52 has a convex tapered surface 52b whose diameter is reduced toward the side with the tip portion, on the tip surface of the nut member 52. The convex tapered surface 52b has a conical surface shape. The convex tapered surface 52b has a circular annular shape that extends over the entire circumference around the center line C on the tip surface of the nut member 52. The convex tapered surface 52b abuts to the centrifugal force receiving portion 36 and the contact portion 39 of the insert 30. The centrifugal force receiving portion 36 supports the convex tapered surface 52b radially inward. The centrifugal force receiving portion 36 abuts to the convex tapered surface 52b from the radially outer side. In the present embodiment, the centrifugal force receiving portion 36 and the contact portion 39 also function as a pressed surface that receives a pressing force directed from the adjustment unit 50 to the axial side with the tip portion.

As shown in Fig. 7, the nut member 52 has a protruding portion 58 at a tip portion of the nut member 52. The protruding portion 58 protrudes further toward the side with the tip portion than the convex tapered surface 52b. The protruding portion 58 has a pillar shape that extends in the axial direction. In the shown example, the protruding portion 58 has a columnar shape. In addition, not limited to this, the protruding portion 58 may have a polygonal pillar shape or the like. The protruding portion 58 is located in the recessed portion 43. The protruding portion 58 faces a second centrifugal force receiving portion 44 from the radially inner side. In the shown example, the second centrifugal force receiving portion 44 faces the outer peripheral surface of the protruding portion 58 with a gap in the radial direction. That is, the second centrifugal force receiving portion 44 faces the adjustment unit 50 with a gap in the radial direction. When a centrifugal force has acted on the adjustment unit 50, the second centrifugal force receiving portion 44 is capable of coming in contact with the adjustment unit 50 to support the adjustment unit 50 radially inward. Additionally, a gap is provided between a tip surface of the protruding portion 58 and the bottom surface of the recessed portion 43 facing the aft-end.

When a centrifugal force directed radially outward has acted on the adjustment unit 50, the insert 30 receives the centrifugal force at the second centrifugal force receiving portion 44. That is, the second centrifugal force receiving portion 44 of the recessed portion 43 is capable of supporting the protruding portion 58 radially inward.

### [Description of Tool Main Body 3]

Portions of the tool main body 2 other than the above-described portions will be described.

As shown in Figs. 3 and 4, the support portion 24 is disposed on the axially aft-end of the adjustment unit 50 to support the adjustment unit 50. A plurality of the support portions 24 are disposed at a distance from each other in the circumferential direction on the outer peripheral surface of the tool main body 2. The number of support portions 24 is the same as the number of adjustment units 50. In the example of the present embodiment, 10 or more (for example, 20) support portions 24 are provided at the outer periphery of the tool main body 2. The support portions 24 are disposed at a rear end portion of an outer peripheral surface of the surrounding wall of the outer main body portion 21.

The support portion 24 has a rib shape that extends in the axial direction. The support portion 24 protrudes radially outward on the outer peripheral surface of the tool main body 2. The support portion 24 protrudes further radially outward than a portion 2a adjacent to the support portion 24 in the circumferential direction (a portion facing the circumferential direction), in the outer peripheral surface of the tool main body 2. In addition, the portion 2a may be paraphrased as the portion 2a located between the support portions 24 lying next to each other in the circumferential direction, in the outer peripheral surface of the tool main body 2.

The support portion 24 protrudes further radially outward than a portion (depression portion 25) adjacent to the side with the tip portion of the support portion 24 on the outer peripheral surface of the tool main body 2.

The support portion 24 has a screw hole 24a that extends in the axial direction. The screw hole 24a penetrates the support portion 24 in the axial direction and opens to the tip surface and the rear end surface of the support portion 24. A female thread portion is provided on an inner peripheral surface of the screw hole 24a. The first screw shaft 53 is screwed to the screw hole 24a.

When viewed from the axial direction, the support portion 24, the adjustment unit 50, the insert mounting seat 4, and the insert 30 are disposed so as to overlap each other.

The radial position of the portion 2b between the adjustment units 50 lying next to each other in the circumferential direction in the outer peripheral surface of the tool main body 2 is radially inside the radial position of the adjustment unit 50. In other words, the adjustment unit 50 is disposed so as to protrude further radially outward than the portion 2b between the adjustment units 50 lying next to each other in the circumferential direction on the outer peripheral surface of the tool main body 2. In the example of the present embodiment, the radial position of the portion 2b between the adjustment units 50 lying next to each other in the circumferential direction on the outer peripheral surface of the tool main body 2 is radially inside the radial position of the center line C of the adjustment unit 50. In addition, the portion 2b may be paraphrased as a portion (a portion facing the circumferential direction) 2b adjacent to the adjustment unit 50 in the circumferential direction on the outer peripheral surface of the tool main body 2.

Although not particularly shown, in a cross-sectional view perpendicular to the center axis O, the portion 2b has an arc shape centered on the center axis O. In an axial region (range) where the portion 2b is disposed on the outer peripheral surface of the tool main body 2, the radial position of the portion 2b is radially outside the radial position of the portion other than the portion 2b. That is, in the axial region where the portion 2b is disposed, the portion 2b forms an outermost diameter portion of the outer peripheral surface of the tool main body 2. For this reason, when the tool main body 2 (outer main body portion 21) is manufactured, the portion 2b can be formed by turning.

In the example of the present embodiment, the radial position of the portion 2b between the adjustment units 50 lying next to each other in the circumferential direction on the outer peripheral surface of the tool main body 2 is radially outside the radial position of the portion 2a between the support portions 24 lying next to each other in the circumferential direction on the outer peripheral surface of the tool main body 2.

Additionally, a portion adjacent to the side with the tip portion of the portion 2b on the outer peripheral surface of the tool main body 2 protrudes further radially outward than the portion 2b.

As shown in Fig. 3, as viewed from the radial direction, the depression portion 25 is disposed at a position overlapping the adjustment unit 50 in the outer peripheral surface of the tool main body 2 (outer main body portion 21) and is recessed radially inward. The number of depression portions 25 is the same as the number of adjustment units 50. In the example of the present embodiment, 10 or more (for example, 20) depression portions 25 are provided at the outer periphery of the tool main body 2.

In the example of the present embodiment, the depression portion 25 has a rectangular hole shape. The depression portion 25 extends in the axial direction. The depression portion 25 is disposed adjacent to the portion 2b between the adjustment units 50 lying next to each other in the circumferential direction on the outer peripheral surface of the tool main body 2, in the circumferential direction. The depression portion 25 is disposed between the portions 2b lying next to each other in the circumferential direction on the outer peripheral surface of the tool main body 2. The depression portion 25 is disposed radially inside the portion 2b. In other words, the radial position of the portion 2b is radially outside than the radial position of the depression portion 25.

As shown in Fig. 4, a portion of the adjustment unit 50 is disposed in the depression portion 25. In the shown example, in the adjustment unit 50, a portion (radially inner end portion) of the operating portion 55 and a portion (radially inner end portion) of the nut member 52 are located in the depression portion 25. When viewed from the axial direction, a portion (radially inner end portion) of the operating portion 55, a portion (radially inner end portion) of the nut member 52, and the depression portion 25 are disposed so as to overlap each other.

### [Effects According to the Present Embodiment]

According to the insert 30 and the indexable milling cutter 1 of the present embodiment described above, since the thinned portion 60 is formed at the tip portion 31t on the axial side with the tip portion, the tip portion 31t of the insert 30 becomes lighter. Accordingly, the position of the center of gravity G of the insert 30 approaches an axial aft-end (axial aft-end). Therefore, when the tool main body 2 has rotated around the center axis O, it is possible to suppress the radially outward displacement of the tip portion 31t of the insert 30 due to a centrifugal force. As a result, it is possible to increase the upper limit of the tool rotation speed.

In the present embodiment, the thinned portion 60 is formed on the axial side with the tip portion with respect to the clamp recess part 37. Accordingly, the tip portion 31t of the insert 30 becomes lighter, and when the tool main body 2 has rotated around the center axis O, it is possible to suppress the radially outward displacement of the tip portion 31t of the insert 30 due to a centrifugal force.

In the present embodiment, the center of gravity G of the insert body 31 is located in the clamp recess part 37. Accordingly, it is difficult for the insert body 31 to rotate around the position where the tip of the clamp screw 19 comes in contact due to a centrifugal force. Therefore, it is possible to suppress the radially outward displacement of the tip portion 31t of the insert 30 due to a centrifugal force.

In the present embodiment, the thinned portion 60 opens to the end surface 31s of the insert body 31. Accordingly, the tip portion 31t of the insert 30 becomes lighter more effectively. Therefore, when the tool main body 2 has rotated around the center axis O, it is possible to more effectively suppress the radially outward displacement of the tip portion 31t of the insert 30 due to a centrifugal force.

In the present embodiment, the insert 30 is detachably mounted on the outer periphery (insert mounting seat 4) of the front end part of the tool main body 2.

That is, the insert 30 is a detachable cutting insert or cutting tip. For this reason, when the insert 30 reaches the end of the tool life, the processing accuracy can be satisfactorily maintained by replacing the insert 30 with another new insert 30. Additionally, a plurality of types of inserts 30 having various cutting edges 7 can be prepared and selectively used in accordance with the type, the processing form, and the like of a work material.

### [Other Configurations Included in the Present Invention]

In addition, the present invention is not limited to the above-mentioned embodiment, and the configuration can be changed without departing from the spirit of the present invention, for example, as described below.

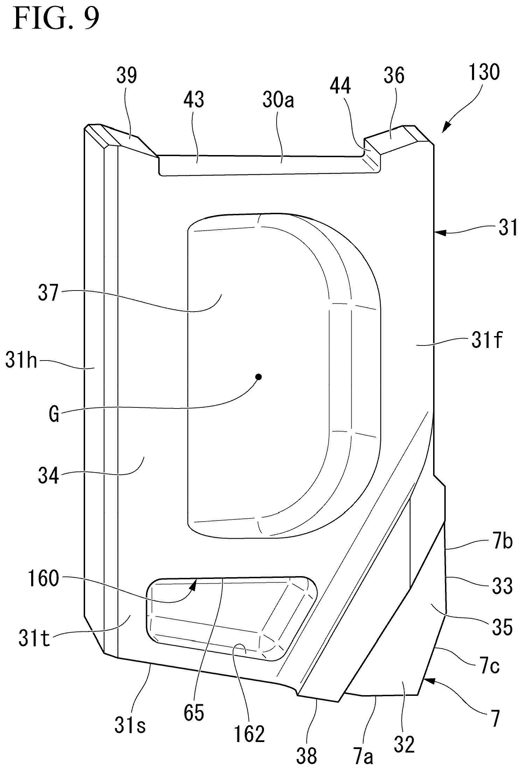

Fig. 9 is a perspective view of an insert 130 of a first modification example. In addition, components having the same aspects as those in the above-described embodiment are designated by the same reference numerals, and the description thereof will be omitted.

In the first modification example, a thinned portion 160 formed in the insert 130 has a thinned recessed portion 162. The thinned recessed portion 162 is formed on the axial aft-end (axial aft-end) than the end surface 31s of the tip portion 31t of the insert body 31. That is, the thinned recessed portion 162 does not open from the end surface 31s of the insert body 31 to the axial side with the tip portion.

According to the first modification example, the thinned recessed portion 162 is formed as the thinned portion 160. Accordingly, the tip portion 31t of the insert 130 is lighter, the position of the center of gravity G of the insert 130 is closer to the axial aft-end (axial aft-end). Therefore, when the tool main body 2 has rotated around the center axis O, it is possible to suppress the radially outward displacement of the tip portion 31t of the insert 130 due to a centrifugal force. As a result, it is possible to increase the upper limit of the tool rotation speed.

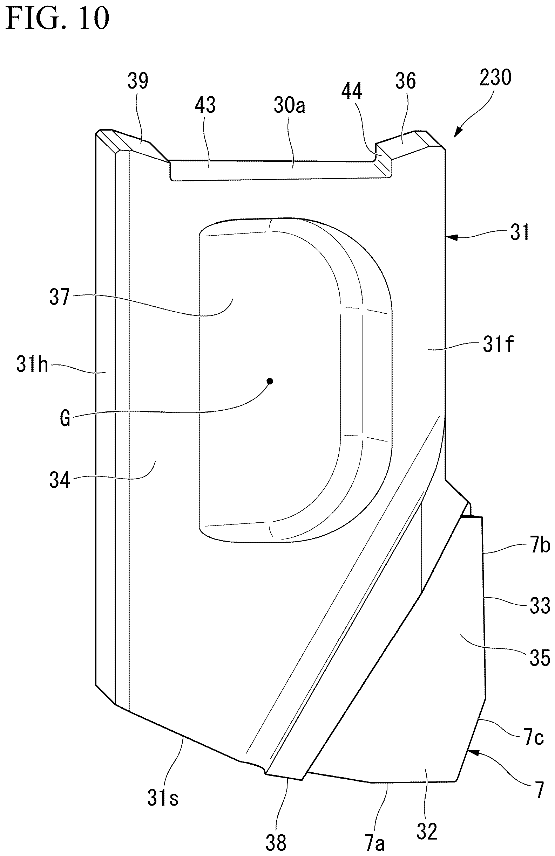

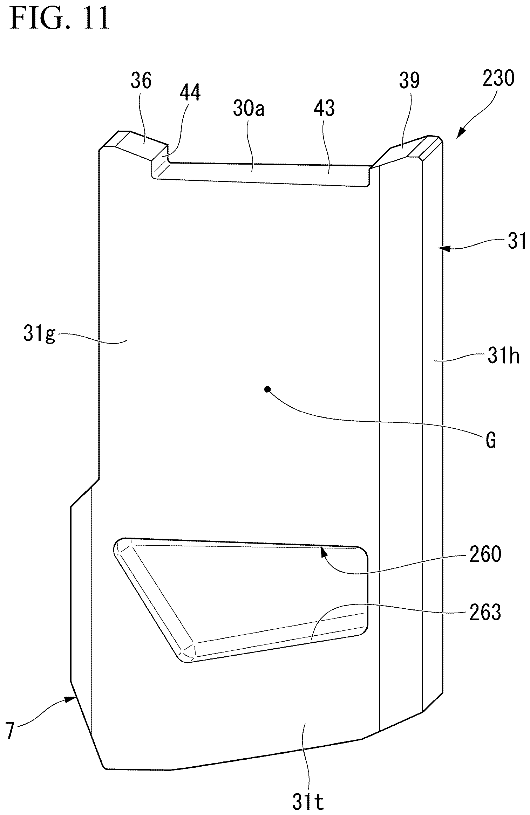

Figs. 10 and 11 are perspective views of an insert 230 of a second modification example. In addition, components having the same aspects as those in the above-described embodiment are designated by the same reference numerals, and the description thereof will be omitted.

In this second modification example, a thinned portion 260 formed in the insert 230 has a thinned recessed portion 263. The thinned recessed portion 263 is disposed at the tip portion 31t of the insert body 31. The thinned recessed portion 263 is recessed in the thickness direction of the insert body 31 from the back surface 31g of the insert body 31. The thinned recessed portion 263 is formed closer to the axial side with the tip portion than the clamp recess part 37 formed on the main surface 31f in the insert body 31. In the insert body 31, the clamp recess part 37 and the thinned recessed portion 263 are formed at a distance from each other in the axial direction.

According to the second modification example, the thinned recessed portion 263 is formed as the thinned portion 260. Accordingly, the tip portion 31t of the insert 230 is lighter, the position of the center of gravity G of the insert 230 is closer to the axial aft-end (axial aft-end). Therefore, when the tool main body 2 has rotated around the center axis O, it is possible to suppress the radially outward displacement of the tip portion 31t of the insert 230 due to a centrifugal force. As a result, it is possible to increase the upper limit of the tool rotation speed.

In the above-mentioned embodiment, the insert 30 includes the adjustment unit 50, but the present invention is not limited to this. The insert 30 may be mounted on the tool main body 2 so that the position thereof cannot be adjusted in the axial direction.

In addition, the respective configurations (components) described in the above-mentioned embodiments, modification examples, and notes may be combined without departing from the spirit of the present invention, and additions, omissions, replacements, and other changes of configurations may be made. Additionally, the present invention is not limited to the above-mentioned embodiment but is limited only to the claims.

For example, in the above-described embodiment, the nut member 52 abuts to the insert 30 on the convex tapered surface 52b, but the convex tapered surface 52b may face the insert 30 via a gap. In this case, the nut member 52 abuts to the insert 30 at another portion.

### [Industrial Applicability]

According to the cutting insert and the milling tool of the present invention, it is possible to suppress the radially outward displacement of the cutting insert due to a centrifugal force and increase the upper limit of the tool rotation speed.

### [Reference Signs List]

1: Indexable milling cutter (milling tool)
2: Tool main body
4: Insert mounting seat
7: Cutting edge
19: Clamp screw
30, 130, 230: Insert (cutting insert)
31: Insert body
31f: Main surface (polygonal surface)
31g: Back surface (polygonal surface)
31s: End surface
31t: Tip portion
32: Rake face
37: Clamp recess part
60, 160, 260: Thinned portion
61, 162, 263: Thinned recessed portion
G: Center of gravity
O: Center axis

## Claims

1. A cutting insert to be mounted on an insert mounting seat formed at an outer periphery of a front end part of a tool main body to be rotated around a center axis with a tip portion of the cutting insert being directed to a fore-end of the center axis, the cutting insert comprising:
an insert body having a polygonal plate shape;
on one polygonal surface of the insert body, a cutting edge provided at a corner of the tip portion and having a rake face on the one polygonal surface; and
a thinned portion formed at the tip portion of the insert body and recessed in a thickness direction of the insert body from the one polygonal surface.

2. The cutting insert according to Claim 1, further comprising:
a clamp recess part provided on the one polygonal surface of the insert body, recessed in the thickness direction from the one polygonal surface, and configured to be abutted to a front end of a clamp screw for fixing the insert body to the insert mounting seat,
wherein the thinned portion is disposed on a side with the tip portion with respect to the clamp recess part.

3. The cutting insert according to Claim 2,
wherein a center of gravity of the insert body is located in the clamp recess part in a plan view.

4. The cutting insert according to any one of Claims 1 to 3,
wherein the thinned portion has an opening in an end surface of the insert body on a side with the tip portion.

5. A milling tool comprising:
a tool main body to be rotated around a center axis; and
a cutting insert to be mounted on an insert mounting seat with a tip portion of the cutting insert being directed to a fore-end of a center axis, the insert mounting seat being formed at an outer periphery of a front end part of the tool main body,
wherein the cutting insert includes:
an insert body having a polygonal plate shape;
on one polygonal surface of the insert body, a cutting edge provided at a corner of the tip portion and has a rake face on the polygonal surface; and
a thinned portion formed at the tip portion of the insert body and recessed in a thickness direction of the insert body from the one polygonal surface.
